# EUROPEAN PATENT SPECIFICATION

(11) **EP 2 592 952 B1**
(45) Date of publication and mention of the grant of the patent: **03.09.2014**
(21) Application number: 11736189.9
(22) Date of filing: 08.07.2011
(51) Int. Cl.: A23L 2/78

(54) **METHODS AND COMPOSITIONS FOR DEACIDIFYING FRUIT JUICE**
VERFAHREN UND ZUSAMMENSETZUNGEN ZUR ENTSÄUERUNG VON FRUCHTSAFT
METHODES ET COMPOSITIONS DE DESACIDIFICATION DE JUS DE FRUIT

(30) Priority: 13.07.2010 EP 10169379
(43) Date of publication of application: 22.05.2013
(73) Proprietor: Nederlandse Organisatie voor toegepast- natuurwetenschappelijk onderzoek TNO, 2628 VK Delft (NL)
(72) Inventor: BUSSMANN, Paulus Josephus Theodorus, NL-7325 AG Apeldoorn (NL); VROON, Ronald Cornelis, NL-6721 BP Bennekom (NL)
(74) Representative: Jansen, Cornelis Marinus
(86) International application number: PCT/NL2011/050503
(87) International publication number: WO 2012/008830

(56) References cited:
- EP-A2- 0 206 239
- EP-A2- 0 334 641
- EP-A2- 1 078 689
- WO-A1-98/07332
- US-A- 4 514 427
- US-A- 4 522 836
- US-A- 5 127 957
- US-B2- 7 264 837

## Description

### FIELD OF THE INVENTION

The present invention relates to a method and a kit for deacidifying fruit juices.

### BACKGROUND OF THE INVENTION

There is a general tendency in food retailing to brand products as being a healthy choice. Customers are increasingly aware of the quantitative and qualitative composition of food products and favor products with a health benefit over comparable products lacking that benefit. As a consequence, the demand for low-fat of fat-free products has risen considerably, as has the demand for low sugar products. Products high in dietary fibre are also favorably branded by manufacturers against comparable products low in fiber content.

Fruit juices are no exception to this, and fruit juices are principally at level with carbonated beverage such as cola with respect to calorie content. In order to brand their product as "healthier", manufacturers may seek to obtain a recognized quality mark. Such quality marks may be easily recognized by the use of interpretative logos such as the Swedish keyhole or the Dutch '*Ik kies bewust*' (My Choice) logo. The keyhole symbol means that a product contains high levels of fibre, low levels of fat and sugar and low levels of salt. The Dutch 'Ik kies bewust' logo means that the levels of trans fat, saturated fat, sodium and sugar fit criteria derived from national and international (FAO/WHO) guidelines, and that the product has a favorable profile with respect to the amount of fibre, saturated fat, energy and/or specific micronutrients, as developed by the Netherlands Nutrition Centre.

In order to lower the sugar content of a fruit juice, manufacturers cannot simply dilute the product with water, as that would also lower the product's fibre content. Manufacturers therefore avail themselves of methods wherein relatively more unripe, less sweet fruits are used as the source of the juices. The disadvantage is that the lower sugar content coincides with a higher acid content, and hence a starting material with a Brix (sugar)/acid ratio that is too low. The high acid level may result in consumers experiencing dental erosion. The high acidity may also cause gastral distress and/or digestive difficulties. Alternatively, juice from a fruit having the desired Brix/acid ratio can be used, but lowering of the sugar content will have to be compensated by lowering of the acid content in order to maintain the desired Brix/acid ratio.

In order to lower the acid content, acids are then selectively removed without removing the fibres. Such methods are for instance known from US 7264837. This patent describes a process for deacidifying a citrus juice stream with a preconditioned ion exchange resin having a decreased binding affinity for organic acids, whereby a deacidified citrus juice is provided of which the acid food pH is maintained at a pH lower than about 4.6 so as to control microbial growth in the juice.

A problem with this method is that the resin requires precise preconditioning to provide for the desired affinity of acid removal, a controllable and varied flow rate of the juice along the resin in order to control the rate of deacidification, and a timely regeneration of the resin in order to maintain its ion binding capacity.

Preconditioning, which must be performed after each regeneration step, is however undesired as it provides for an additional process parameter and potential contamination step. Furthermore, this approach requires the use of additional chemicals and by preloading the resin the operational binding capacity for organic acids is reduced. A varied flow rate is also not beneficial, as is results in variable industrial production rates. The moment at which the resin must be regenerated is also an unpredictable process parameter.

US 4522836 discloses a method for deacidifying orange juice by contacting the juice with a bed of resin having a tertiary amine functionality.

Hence, there is a need for a method for deacidifying fruit juice that overcomes the deficiencies of the prior art methods.

### SUMMARY OF THE INVENTION

The problems of the prior art methods have now been overcome by using a system comprising an ion exchange resin in a simulated moving bed configuration wherein the dimensioning of the system is such that a continuous (outcoming) product flow is achieved having a constant composition and hence a constant acid content and pH. In a system of the present invention organic acids are removed from the juice flow only as undissociated molecules, in other words both acid anions and protons are bound to the resin.

In a first aspect, the present invention provides a method for deacidifying fruit juice comprising the steps of a) providing an adsorbent resin having a tertiary amine functionality, and b) contacting the fruit juice with said adsorbent resin to extract the free organic acids from said juice, wherein said step of contacting the fruit juice with said resin comprises moving a flow of said fruit juice over said adsorbent resin using a simulated moving bed chromatography technique.

In another preferred embodiment, said free organic acid comprises 3-8 carbon atoms, and 1-4 carboxyl groups.

In another preferred embodiment, said free organic acid is selected from the group consisting of acetic acid, adipic acid, aspartic acid, citric acid, gluconic acid, glutamic acid, glycolic acid, itaconic acid, lactic acid, malic acid, succinic acid and tartaric acid, most preferably from the group consisting of malic acid, citric acid and tartaric acid.

In still another preferred embodiment, said adsorbent resin is selected from the group consisting of ion exchange resins with a matrix based on crosslinked organic polymers (such as polystyrene/divinylbenzene, polyacrylic copolymer), crosslinked polysaccharides (such as agarose, dextran, etc), and silica.

In another preferred embodiment, said tertiary amine functionality is selected from the group consisting of anion exchange resins with nitrogen containing functional groups.

In another preferred embodiment, said fruit juice is selected from the group consisting of apple juice, apricot juice, citrus juice, pear juice, cranberry juice, grape juice, mango juice, raspberry juice, strawberry juice, cherry juice, peach juice, kiwi juice, banana juice, tomato juice, guava juice, pineapple juice and mixtures thereof, more preferably said citrus juice is selected from grapefruit juice, orange juice, tangerine juice and mixtures thereof.

In another aspect, the present invention provides a kit of parts, adapted for deacidifying fruit juice, said kit comprising an adsorbent resin having a tertiary amine functionality for deacidifying fruit juice, wherein the kit of parts is arranged for preparing a simulated moving bed chromatography system, said kit further comprising instruction for the use of the system in the removal of acid and sugar from fruit mice in accordance with a method as described herein above.

In a preferred embodiment of the kit of parts according to the invention, said adsorbent resin is provided as a column packing material for producing at least one column for the adsorption of acids in fruit juice.

### DESCRIPTION OF THE DRAWINGS

### Definitions

The term "juice", as used in this application, refers to a liquid that is naturally contained in fruit or vegetable tissue. The term juice includes a preserved or processed natural liquid such, for example, a mixture of natural liquids, a pasteurized liquid and/or a sweetened liquid. The term juice also includes a diluted natural liquid such as, for example, nectar and juice drink.

The term "fruit" refers to the fleshy structures of certain plants that are edible in the raw state. Non-limiting examples of fruits from which juice can be obtained and deacidified by methods aof the present invention inclide fruits from plants selected from the *Roseacea* family, such as apple and pear, the genus *Prunus,* such as peach, cherry and apricot, the genus *Rubus,* such as blackberry and raspberry, the *Ericaceae* family, such as blueberry, strawberry and cranberry, the *Rutaceae* family, such as orange, grapefruit, tangerine and citron, the *Solanaceae* family such as tomato and potato, the genus *Mangifera,* such as mango, the *Actinidiaceae* family, such as kiwi, the *Bromeliaceae* family such as pineapple, the *Myrtaceae* family such as guava, the *Meliaceae* family such as santol, the *Musaceae* family such as banana, and the *Rhamnaceae* family such as redberry. Apple, apricot, cherry, grape, grapefruit, guava, lime, lemon, mango, orange, peach, pear, pineapple, raspberry, strawberry, tamarind, and (water)melon are preferred fruits.

The term "column" is to be understood in a broad sense. Thus, it refers not only to the actual separating columns, but also, for example, to pre-separation columns, enrichment columns, etc., in any shape or form, wherein the juice is contacted - generally by a flow-trough principle - with a column packing material with which the column is filled, comprising e.g. the deacidifying adsorbent resin. The column in a preferred embodiment may be a simulated moving bed chromatography system comprising a multitude of interconnected columns as described herein.

### DESCRIPTION OF THE PREFERRED EMBODIMENTS

The present inventors discovered that the use of columns using adsorption resin having tertiary amine functionality for the adsorption of organic acids from fruit juice, when combined with a SMBC process, provides for a very efficient deacidification process for fruit juices. This process can, in a much preferred embodiment, be performed at industrial scale, since SMBC processes for the refining of sugars on industrial scales are well known.

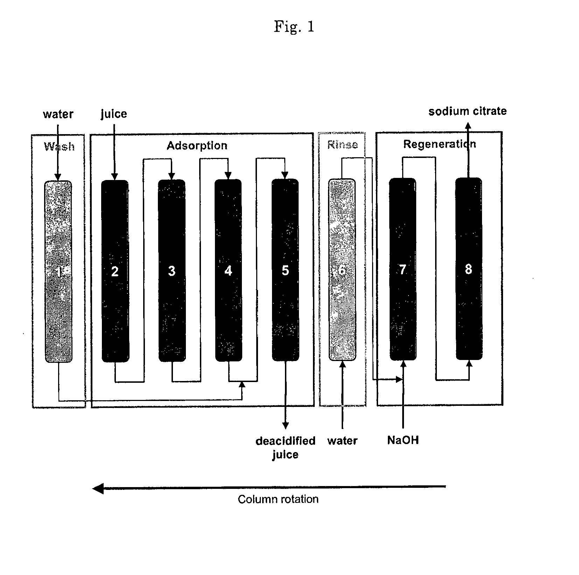

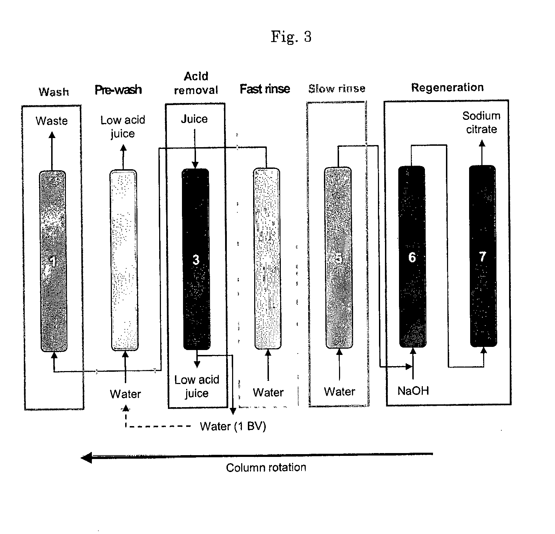

The use of columns is preferably such that the process is preformed using a column rotation system as exemplified in Figures 1 and 3. This system provides for a simulated moving bed configuration. The advantage of using such a system over the preconditioned column approach such as for instance used in US 7,264,837 is that the pH of the fruit juice stream can be better controlled.. In fact, the methods and devices of the invention provide for a process in which the pH can be actively and precisely controlled during the deacidification procedure.

This important advantage of the use of the specific column material now provides for the necessary presence of residual organic acids in ionic form in the fruit juice, thereby providing sufficient antimicrobial capacity to the raffinate juice.

The present invention has as an additional advantage over the prior art compositions/methods that a better performance is realized. For instance the system of the present invention has a higher capacity than prior art systems in be used, depending on the acidity of the fruit juice. In one preferred embodiment, the resin used is a weakly-basic resin, preferably a polystyrene copolymer which contains a tertiary amine group as a functional group. These resins are commercially available. This weakly-basic resin is preferred because of its ability to pull organic acid in un-dissociated form from the juice, thereby producing a deacidified juice stream. It is presently believed that beaded or monospheric resin types are especially suitable for use in connection with the invention.

The following resins possess tertiary amine functionality and may be suitable for binding organic acids. Examples Non-limiting examples of resins based on crosslinked organic polymers include Dowex Monosphere 66, Dowex Monosphere 77, Dowex Marathon Wba, Dowex Marathon Wba-2, Dowex Upcore Mono Wb-500, Dowex 66, Dowex M-43, Amberlite Fpa53, Amberlite FPA55, Amberlite IRA67, Amberlite Ira96, Purolite A-100, Purolite A-103s, Purolite A847, Diaion Wa10, Diaion Wa21j, Diaion Wa30, Sepabeads FP-DA, Lewatit Monoplus Mp64, and Lewatit Vp Oc 1072. Non-limiting examples of resins based on crosslinked polysaccharides are ANX Sepharose 4 Fast Flow and DEAE Sephadex.

Although a resin with tertiary amine functionality is in principle capable of exchanging anions under certain conditions, this ability is not used in the present invention. In the present invention organic acids are bound to the column material without exchanging and/or releasing any anion from the column to the carrier solution. In order to regenerate the column a shift in pH is required. This may for instance be accomplished by using a hydroxide-containing solution as regenerant. As a result of this regeneration process, an organic acid salt is produced, which is removed from the column.

### The extraction method

The fruit juice may be pre-treated prior to being contacted with the either or both resins. Preferably, such pre-treatment comprises the removal of is required. This may for instance be accomplished by using a hydroxide-containing solution as regenerant. As a result of this regeneration process, an organic acid salt is produced, which is removed from the column.

### The extraction method

The fruit juice may be pre-treated prior to being contacted with the either or both resins. Preferably, such pre-treatment comprises the removal of substances that can interfere with ion exchange between acid and resin. In particular such pre-treatment includes the removal of particulate, colloidal and/or precipitating material which may clog the resin. For this purpose membrane filtration is suitably used. Using membrane filtration (in particular ultra filtration (UF)) particles can be removed so that pollution or clogging of the resin bed can be prevented. De resulting pulp may, following the deacidification of the juice, be returned to the juice, by which an opaque and coloured end product is obtained. Another advantage is that microorganisms can be removed which provides for a sterile feed in the adsorption process.

A method of the present invention provides an improved method for deacidifying a fruit juice. Preferably, this is accomplished by using different columns that are serially connected such that the material exiting one column is fed to another column.

The invention makes use of a simulated moving bed chromatography (SMBC) technique for adsorption of the acids from the fruit juice. SMBC is preferably achieved by the use of a multiplicity of columns interconnected in series and via a valve arrangement, which provides for sample (fruit juice) and eluent (such as water) feed, and also extract (organic acid) and raffinate (deacidified fruit juice) takeoff at appropriate locations of any column, whereby it allows switching at regular intervals the sample entry in one direction, the eluent entry in the opposite direction, whilst changing the extract and raffinate takeoff positions appropriately as well. Examples of this configuration of the multiplicity of columns is provided in Figs 1 and 3. The wherein the column is fed with sample (fruit juice) for deacidification and wherein the sample is deacidified (position "2-5" in Fig. 1 and position "3" in Fig. 3), a third position wherein the column used for deacidification is rinsed (position "6" in Fig. 1 and position "4-5" in Fig. 3), and a fourth position wherein the rinsed column is regenerated (position "7-8" in Fig. 1 and position "6-7" in Fig. 3). Regeneration is preferably performed with sodium hydroxide.

Thus, the deacidification process of the present invention preferably comprises an SMB process wherein multiple columns rotate between a wash position, a deacidification position (also indicated as an adsorption or acid removal position), a rinse position and a regeneration position. The deacidified juice is collected from the deacidification position occupied by at least one column. It is thus noted that each position may be occupied (i.e., each step in the process may be performed) by multiple columns. The positions are preferably arranged such that a higher number position covers a subsequent process step.

In an optional additional process step, the fruit juice acids may be collected from the effluent of the regenerated column. Hence, the present invention also provides a process for collection of fruit acids from fruit juice.

Highly preferred embodiments of the process of the invention are depicted in Figs 1 and 3, wherein the various sample, wash, rinse, effluent and waste streams are indicated.

The advantage of the SMBC is high speed, because a system could be near continuous. Simulated moving bed applications are well known in the art, and these can in principle be used in aspects of the invention using the adsorbent resins as described herein for the purpose of the invention. U.S. Pat. No. 4,412,866 describes the operation of an SMB to separate the components of a feed stock. U.S. Pat. Nos. 4,359,430 and 5,127,957 and International Application WO 96/10650 describe methods for the recovery of a betaine fraction from various sources, such as the molasses produced by a sugar factory.

The method of the invention in a preferred embodiment involves the step of contacting the fruit juice with a single or two resins, e.g. a porous solid, a gel type material, a single or two resins having a monolithic polymer structure or a packed bed of resin particles. The single or two resins are preferably capable or adapted to adsorb the acid on its (internal) surface. This can be accomplished by providing a single or two resins as described in great detail above.

In a method of the invention the acid removal process is an SMB chromatographic process. SMB chromatography has been widely commercialised amongst others for the separation of glucose and fructose, and the desugarisation of molasses.

Prior to the adsorption step, the process stream may be freed from solid particles, which may otherwise result in clogging of the deacidification column. Furthermore a process step may be included for the clarification of the process stream and in which colloidal and/or precipitating materials are removed, which would otherwise lead to clogging of the adsorption column or fouling of the ion exchange resin in the adsorptive separation unit. The next step is the adsorptive separation step in which the acid is adsorbed by the deacidifying resin. This process unit-operation may be either a(n) (cyclic) adsorptive separation process or a chromatographic separation process. Several technical embodiments of such processes are described in literature, see e.g. Principles of adsorption and adsorption processes D.M. Ruthven (1984), New York: John Wiley & Sons., and Large-scale Adsorption and Chromatography (2 vols.) P.C. Wankat, CRC Press, Boca Raton, (1986).

Prior to the adsorptive purification of the fruit juice, the juice may be clarified and stabilised by one or a combination of unit-operations well known to those skilled in the art, such as sieving, (membrane)filtration, centrifugation, etc.. Coarse solid particles may be removed by means of sieves. Subsequently, the stabilized and clarified fruit juice is brought into contact with an ion exchange resin which is preferably capable of extracting acid in a SMB chromatographic unit as described herein.

The invention will now be illustrated by way of the following non-limiting examples.

### EXAMPLE

Frozen concentrated orange juice was diluted with water to 11.6°Brix. This orange juice was pretreated by centrifugation and filtrated over a membrane filter (0.45 µm) for removing suspended solids in order to prevent clogging of the resin during deacidification.

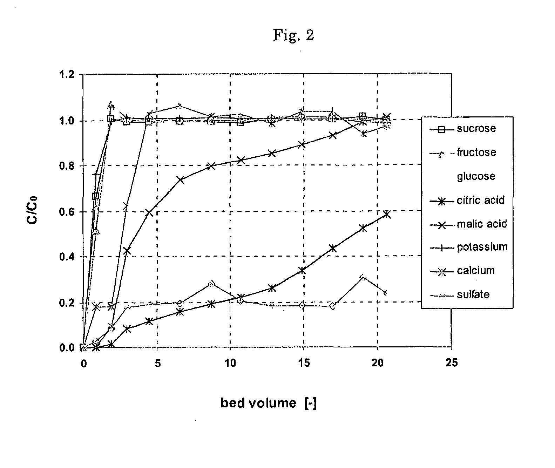

A column packed with 54 mL weak base anion exchange resin Dowex Monosphere 77 was used for removal of citric acid from orange juice. The resin bed was loaded with 21 bed volumes of pretreated orange juice at a flow rate of 3.5 mL/min. The normalized concentration of sugars, acids, salts and pH in the deacidified juice was determined and the results are illustrated in Fig. 2. Sugars and cations showed a sharp breakthrough since these compounds do not bind to the resin. Binding of citric acid and to a lesser extent malic acid resulted in a lowered concentration of these compounds in the treated juice. In the first 10 bed volumes the pH was above 7.4 due to the high removal of citric acid (80%). With a progressive saturation of the adsorption capacity, the removal of citric acid diminished to 40% causing the pH to lower to 4.3. Sulfate which is present in low concentrations also bound to the resin.

After the deacidification stage the resin bed was washed with 1.3 bed volumes of water at a flow rate of 3.5 mL/min. For the regeneration of the acid loaded resin 5 bed volumes of 2% sodium hydroxide solution were used at a flow rate of 2.5 mL/min. TABLE 1 shows the amount of eluted compounds during the regeneration cycle. For all eluted compounds a comparison was made with the amount fed to the column during the adsorption stage.

**Table 1 Amounts of eluted compounds during regeneration compared to the amounts of these compounds fed to the resin during adsorption.**

| Component | Amount fed to resin during adsorption [g] | Amount eluted during regeneration [g] | Removed during adsorption [%] |
|---|---|---|---|
| Fructose | 28.0 | 0.003 | 0.0 |
| Glucose | 25.5 | 0.013 | 0.1 |
| Sucrose | 47.9 | 0.002 | 0.0 |
| Citric acid | 10.6 | 7.10 | 67.0 |
| Malic acid | 1.53 | 0.143 | 9.3 |
| Potassium | 2.35 | n.d. | 0 |
| Calcium | 0.097 | n.d. | 0 |
| Sulfate | 0.069 | 0.068 | 98.3 |

From this table it can be concluded that an amount of 67% and 9.3% of the initial amount of citric and malic acid, respectively, was bound to the column. An amount of 98.3% of the sulfate was removed from the orange juice. However, the total amount of sulphate is low compared to the organic acids and consequently the sulfate will only use a minor part of the adsorption capacity of the resin (< 2%). Furthermore, it can be concluded that during the deacidification stage sugars and cations are not removed from the juice with this resin.

## Claims

1. A method for deacidifying fruit juice comprising the steps of a) providing an adsorbent resin having a tertiary amine functionality, and b) contacting the fruit juice with said adsorbent resin to extract the free organic acids from said juice, wherein said step of contacting the fruit juice with said resin comprises moving a flow of said fruit juice over said adsorbent resin using a simulated moving bed chromatography technique.

2. Method according to claim 1, wherein said free organic acid comprises 3-8 carbon atoms, and 1-4 carboxyl groups.

3. Method according to any one of the preceding claims, wherein said free organic acid is selected from the group consisting of acetic acid, adipic acid, aspartic acid, citric acid, gluconic acid, glutamic acid, glycolic acid, itaconic acid, lactic acid, malic acid, succinic acid and tartaric acid.

4. Method according to any one of the preceding claims, wherein said adsorbent resin is selected from the group consisting of ion exchange resins with a matrix based on crosslinked organic polymers, crosslinked polysaccharides and silica.

5. Method according to any one of the preceding claims, wherein said tertiary amine functionality is selected from the group consisting of anion exchange resins with nitrogen containing functional groups.

6. Method according to any one of the preceding claims, wherein said fruit juice is selected from the group consisting of apple juice, apricot juice, citrus juice, pear juice, cranberry juice, grape juice, mango juice, raspberry juice, strawberry juice, cherry juice, peach juice, kiwi juice, banana juice, tomato juice, guava juice, pineapple juice and mixtures thereof.

7. Method according to claim 6, wherein said citrus juice is selected from grapefruit juice, orange juice, tangerine juice and mixtures thereof.

8. Kit of parts, adapted for deacidifying fruit juice, said kit comprising an adsorbent resin having a tertiary amine functionality for deacidifying fruit juice, wherein the kit of parts is arranged for preparing a simulated moving bed chromatography system, said kit further comprising instruction for the use of the system in the removal of acid and sugar from fruit juice in accordance with a method according to any one of claims 1-7.

9. Kit of parts according to claim 8, wherein said adsorbent resin is provided as a column packing material for producing at least one column for the adsorption of the acids.

## Patentansprüche

1. Verfahren zur Entsäuerung von Fruchtsaft, umfassend die Schritte von a) Bereitstellen eines adsorbierenden Harzes mit einer tertiären Aminfunktionalität und b) in Kontakt bringen des Fruchtsafts mit dem adsorbierenden Harz, um dem Fruchtsaft die freien organischen Säuren zu entziehen, wobei der Schritt des in Kontakt bringens des Fruchtsafts mit dem Harz, das Bewegen eines Flusses des Fruchtsaft über das adsorbierende Harz unter Verwendung eines simulierter simulierten beweglichen Chromatographie-Bett-Technik umfasst.

2. Verfahren nach Anspruch 1, wobei die freie organische Säure 3-8 Kohlenstoffatome und 1-4 Carboxylgruppen umfasst.

3. Verfahren nach einem der vorhergehenden Ansprüche, wobei die freie organische Säure ausgewählt ist aus der Gruppe bestehend aus Essigsäure, Adipinsäure, Asparaginsäure, Zitronensäure, Gluconsäure, Glutaminsäure, Glycolsäure, Itaconsäure, Milchsäure, Apfelsäure, Bernsteinsäure und Weinsäure.

4. Verfahren nach einem der vorhergehenden Ansprüche, wobei das adsorbierende Harz ausgewählt ist aus der Gruppe bestehend aus ionischen Austauschharzen mit einer Matrix, basierend auf quervernetzten organischen Polymeren, quervernetzten Polysacchariden und Silica.

5. Verfahren nach einem der vorhergehenden Ansprüche, wobei die tertiäre Aminfunktionalität ausgewählt ist aus der Gruppe bestehend aus anionischen Austauschharzen mit stickstoffhaltigen funktionellen Gruppen.

6. Verfahren nach einem der vorhergehenden Ansprüche, wobei der Fruchtsaft ausgewählt ist aus der Gruppe, bestehend aus Apfelsaft, Aprikosensaft, Zitrussaft, Birnensaft, Preiselbeersaft, Traubensaft, Mangosaft, Himbeersaft, Erdbeersaft, Kirschsaft, Pfirsichsaft, Kiwisaft, Bananensaft, Tomatensaft, Guavensaft, Ananassaft und Gemischen davon.

7. Verfahren nach Anspruch 6, wobei der Zitrussaft ausgewählt ist aus Grapefruitsaft, Orangensaft, Tangerinensaft und Gemischen davon.

8. Kit von Teilen, geeignet zum Entsäuern von Fruchtsaft, wobei das Kit ein adsorbierendes Harz mit einer tertiären Aminfunktionalität zum Entsäuern von Fruchtsaft umfasst, wobei das Kit von Teilen angeordnet ist, ein simuliertes bewegliches Chromatographie-Bett-System herzustellen, wobei das Kit ferner Anweisungen zur Verwendung des Systems beim Entfernen von Säure und Zucker aus dem Fruchtsaft gemäß einem Verfahren nach einem der Ansprüche 1-7 umfasst.

9. Kit von Teilen nach Anspruch 8, wobei das adsorbierende Harz als ein Säulenpackungsmaterial zur Herstellung mindestens einer Säule für die Adsorption der Säuren bereit gestellt wird.

## Revendications

1. Procédé de désacidification d'un jus de fruit comprenant les étapes consistant à : a) fournir une résine adsorbante présentant une fonctionnalité d'amine tertiaire, et b) mettre en contact le jus de fruit avec la résine adsorbante pour extraire les acides organiques libres à partir du jus, dans lequel l'étape de mise en contact du jus de fruit avec la résine comprend le déplacement d'un écoulement du jus de fruits, sur la résine adsorbante, en utilisant une technique de chromatographie à lit mobile simulé.

2. Procédé selon la revendication 1, dans lequel l'acide organique libre comprend 3 à 8 atomes de carbone, et de 1 à 4 groupes carboxyle.

3. Procédé selon l'une quelconque des revendications précédentes, dans lequel l'acide organique libre est choisi dans le groupe constitué par l'acide acétique, l'acide adipique, l'acide aspartique, l'acide citrique, l'acide gluconique, l'acide glutamique, l'acide glycolique, l'acide itaconique, l'acide lactique, l'acide malique, l'acide succinique et l'acide tartrique.

4. Procédé selon l'une quelconque des revendications précédentes, dans lequel la résine adsorbante est choisie dans le groupe constitué par des résines échangeuses d'ions ayant une matrice à base de polymères organiques réticulés, de polysaccharides réticulés et de silice.

5. Procédé selon l'une quelconque des revendications précédentes, dans lequel la fonctionnalité d'amine tertiaire est choisie dans le groupe constitué par des résines échangeuses d'anions ayant des groupes fonctionnels contenant de l'azote.

6. Procédé selon l'une quelconque es revendications précédentes, dans lequel le jus de fruit est choisi dans le groupe constitué par du jus de pomme, du jus d'abricot, du jus d'agrume, du jus de poire, du jus de canneberge, du jus de raisin, du jus de mangue, du jus de framboise, du jus de fraise, du jus de cerise, du jus de pêche, du jus de kiwi, du jus de banane, du jus de tomate, du jus de goyave, du jus d'ananas et de due ceux-ci.

7. Procédé selon la revendication 6, dans lequel le jus d'agrume est choisi parmi du jus de pamplemousse, du jus d'orange, du jus de mandarine et des mélanges de ceux-ci.

8. Kit de parties adaptées pour la désacidification d'un jus de fruit, le kit comprenant une résine adsorbante présentant une fonctionnalité d'amine tertiaire pour la désacidification d'un jus de fruit, dans lequel le kit de parties est agencé pour la préparation d'un système de chromatographie à lit mobile simulé, le kit comprenant en outre des instructions pour l'utilisation du système dans l' enlèvement de l'acide et du sucre à partir de jus de fruit selon un procédé selon l'une quelconque des revendications 1 à 7.

9. Kit de parties selon la revendication 8, dans lequel la résine adsorbante est fournie sous la forme de matériau de garnissage de colonne pour la production d'au moins une colonne pour l'adsorption des acides.
